# FASCICULE DE BREVET EUROPEEN

(11) **EP 2 219 935 B1**
(45) Date de publication et mention de la délivrance du brevet: **24.08.2011**
(21) Numéro de dépôt: 08848120.5
(22) Date de dépôt: 07.11.2008
(51) Int. Cl.: B62D 25/08, B62D 21/17, B62D 25/14, B62D 65/14, B60R 13/08

(54) **STRUCTURE RIGIDE COMPRENANT DES MOYENS DE MISE EN POSITION D'UN PANNEAU INSONORISANT ET PANNEAU INSONORISANT CORRESPONDANT**
STARRE STRUKTUR MIT MITTELN ZUR POSITIONIERUNG EINER SCHALLDÄMMENDEN PLATTE UND ENTSPRECHENDE SCHALLDÄMMENDE PLATTE
RIGID STRUCTURE COMPRISING MEANS FOR POSITIONING A SOUNDPROOFING PANEL, AND CORRESPONDING SOUNDPROOFING PANEL

(30) Priorité: 09.11.2007 FR 0758937
(43) Date de publication de la demande: 25.08.2010
(73) Titulaire: Renault s.a.s., 92100 Boulogne-Billancourt (FR)
(72) Inventeur: OUATIK, Ali, F-78310 Coignières (FR)
(86) Numéro de dépôt international: PCT/EP2008/065121
(87) Numéro de publication internationale: WO 2009/060061

(56) Documents cités:
- DE-A1- 10 348 934
- DE-B3-102005 050 242
- DE-B3-102006 031 396

## Description

L'invention concerne une structure rigide comprenant des moyens de mise en position d'un panneau insonorisant et un panneau insonorisant correspondant.

De tels panneaux sont notamment destinés aux véhicules automobiles, où ils sont utilisés pour isoler l'habitacle de l'environnement extérieur. En particulier, ils peuvent être fixés sur le tablier du véhicule automobile, pour atténuer le bruit occasionné à l'intérieur de l'habitacle par le moteur. Dans ce cas, la planche de bord vient généralement recouvrir au moins la partie supérieure du panneau.

Dans l'application considérée, le panneau insonorisant est disposé entre le tablier et la planche de bord, sa présence permettant d'amortir les vibrations du tablier et par conséquent de réduire le bruit occasionné par le moteur.

Ces panneaux sont actuellement réalisés sous la forme d'une plaque massive de densité élevée, appelée masse lourde, associée à un support faisant office de ressort, tel qu'une couche de mousse. L'ensemble constitué par la masse lourde et le ressort favorise, de par sa structure, l'amortissement des vibrations et présente par conséquent des propriétés d'isolation acoustique intéressantes.

Ainsi, ce panneau est particulièrement lourd et lors de sa mise en position sur le tablier avant sa fixation définitive, le panneau peut retomber du fait de sa masse importante, de sa taille et de sa souplesse.

Ceci procure de nombreux inconvénients. En effet, s'il ne se plaque pas parfaitement contre le tablier, s'il vient en contact et/ou se mettre en contrainte avec les pièces environnantes, s'il se décentre vis-à-vis des évidements réalisés sur le tablier, par exemple, pour faire passer des câblages, des chapes de frein, des tuyaux de climatiseur, il peut arriver des difficultés au montage des pièces traversant ou non le panneau insonorisant et bien évidemment une mauvaise étanchéité acoustique.

Par ailleurs, le document DE 10 2006 031396 décrit une structure rigide selon le préambule de la revendication 1, apte à séparer le compartiment moteur de l'habitacle d'un véhicule automobile comprenant, dans sa partie supérieure, une traverse au dessous de laquelle s'étend une cloison sensiblement verticale, une zone de jonction étant présente entre ces deux éléments. Plus particulièrement, la structure de décrite dans le document comprend une traverse qui comporte un bourrelet pour mettre en position un panneau insonorisant. Toutefois, une telle structure procure également de nombreux inconvénients, notamment en termes de coût de fabrication et en termes de simplicité de montage et d'installation.

Pour pallier à l'ensemble de ces inconvénients, l'invention propose une structure rigide apte à séparer le compartiment moteur de l'habitacle d'un véhicule automobile comprenant, dans sa partie supérieure, une traverse au dessous de laquelle s'étend une cloison sensiblement verticale, une zone de jonction étant présente entre ces deux éléments, caractérisé en ce que la traverse comporte des extensions de matière réalisées d'une seule pièce avec ladite traverse de manière à ce que, après pliage, ces extensions constituent des languettes de mise en position pour un panneau insonorisant.

La présence de ces languettes permet d'éviter un décentrage du panneau par rapport à la structure rigide sur laquelle il doit être monté. En effet, il suffit de les positionner dans les découpes réalisées sur le panneau et correspondant aux languettes pour que ce dernier soit maintenu pendant et après que les opérateurs procèdent à l'assemblage de ces deux pièces : la structure rigide et le panneau insonorisant. Aussi, ces languettes présentent l'avantage d'être réalisées avec la traverse en une seule pièce, ce qui est facilement réalisable notamment par emboutissage et découpage de ladite structure et ce qui n'engendre pas un surcoût trop élevé de fabrication puisqu'il s'agit simplement d'extensions de matière pliées ensuite.

Selon les caractéristiques de l'invention :
- les languettes, après pliage, peuvent être agencées au niveau de la jonction entre la traverse et la cloison lorsque ces deux pièces sont assemblées,
- une fois pliées, les languettes peuvent se trouver dans un plan sensiblement vertical de manière à maintenir de manière adéquate le panneau insonorisant,
- les languettes peuvent être réparties de manière symétrique par rapport à un plan défini par une direction sensiblement verticale et sensiblement longitudinale de manière à assurer un bon maintien du panneau sur la structure rigide,
- une languette latérale peut être disposée sensiblement au niveau de chaque extrémité latérale de la jonction de la traverse avec la cloison et deux languettes centrales peuvent être disposées de part et d'autre à proximité du plan de symétrie,
- les languettes peuvent avoir une longueur adaptée à ce qu'elles soient apparentes une fois le panneau insonorisant monté sur la structure rigide,
- la hauteur des languettes latérales peut être supérieure à la hauteur des languettes centrales,
- les languettes peuvent être renforcées en leur centre par un embouti formant un bossage orienté vers une direction opposée à la résultante des forces générées par le panneau lorsque celui-ci est monté sur la structure rigide, et
- des encoches peuvent être disposées de part et d'autre de chaque languette pour faciliter l'opération de pliage.

L'invention concerne également le panneau d'insonorisation correspondant à une telle structure rigide, caractérisé en ce qu'il peut comprendre dans sa partie supérieure des découpes de réception des languettes de manière à ce que ledit panneau soit disposé de manière adéquate pour assurer une bonne étanchéité acoustique une fois celui-ci monté sur ladite structure rigide.

L'invention sera désormais décrite dans un exemple de réalisation non limitatif, en référence aux figures annexées :

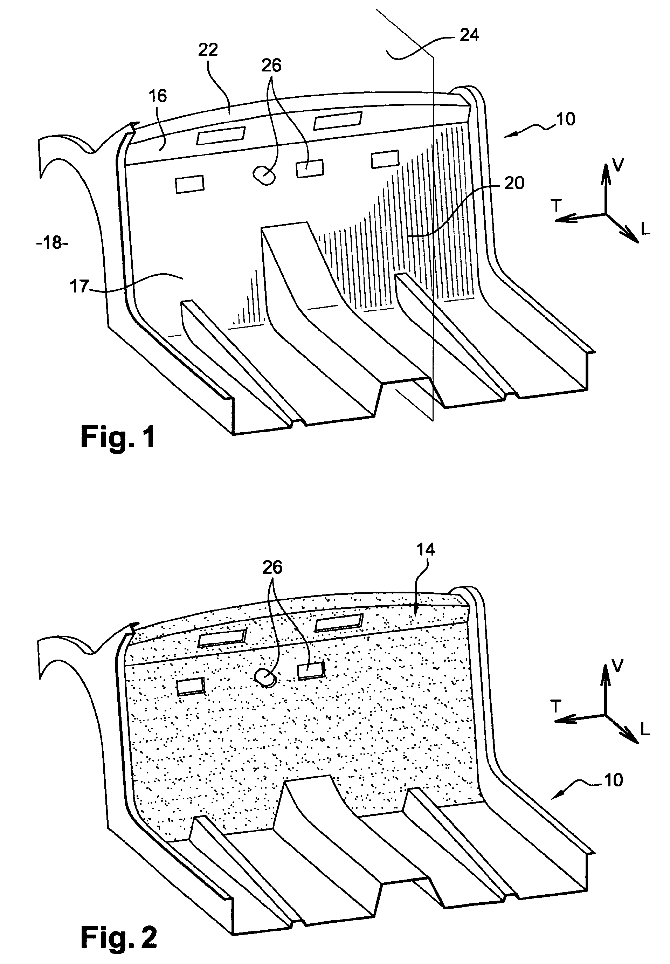

- la figure 1 représente une vue en perspective de la structure rigide selon l'invention,
- la figure 2 représente une vue en perspective d'un panneau insonorisant monté sur la structure rigide selon l'invention,
- la figure 3 représente une vue détaillée de la partie supérieure de la structure rigide selon l'invention,
- la figure 4 représente une vue en perspective des languettes centrales de mise en position selon l'invention,
- la figure 5 représente une vue en perspective d'une languette latérale de mise en position selon l'invention,
- la figure 6 représente une section de la structure comprenant le panneau insonorisant au niveau des languettes centrales, et
- la figure 7 représente une section de la structure comprenant le panneau insonorisant au niveau des languettes latérales.

Dans la description qui va suivre, des éléments identiques, similaires ou analogues seront désignés par les mêmes chiffres de référence.

En référence aux figures, l'invention divulgue une structure rigide 10 comportant des moyens de mise en position 12 d'un panneau insonorisant 14 sur ladite structure rigide avant la fixation de ce panneau sur la structure, par exemple, avec des agrafes.

La structure rigide 10 selon l'invention est, selon notre mode de réalisation, une structure de caisse de véhicule automobile visant à séparer le compartiment moteur 18 et l'habitacle 20. C'est à travers cette structure que de nombreux câblages ou conduits vont passer pour, par exemple, alimenter en puissance les différents éléments électriques ou électroniques du tableau de bord, ou pour climatiser un habitacle.

Elle comporte classiquement une traverse 22 dans sa partie supérieure s'étendant, comme son nom l'indique, transversalement et une cloison de chauffage 16 disposée sous cette traverse et s'étendant selon un plan comprenant les directions transversale et verticale. Disposé sous cette cloison 16, se trouve aussi un tablier 17 s'étendant selon ce même plan. Cette structure est classiquement assemblée par soudage par point.

La traverse 22 est métallique et est réalisée en une seule pièce par emboutissage. Lors de sa réalisation selon l'invention, des extensions 12 de matière sont prévues au niveau d'une zone amenée à se mettre en contact avec la cloison 16 lors de l'assemblage. Ces extensions 12 sont pliées après l'emboutissage de la traverse 22 pour former des languettes 12A et 12B de mise en position du panneau insonorisant 14, lorsque la structure métallique 10 sera assemblée. Les languettes 12A et 12B pliées seront donc accessibles au niveau d'une jonction 30 entre la traverse 22 et la cloison 16.

Ainsi, ces languettes sont positionnées, selon notre mode de réalisation, dans la partie supérieure de la structure rigide 10. Les languettes sont réparties symétriquement au niveau de la jonction 30 par rapport à un plan 24 comprenant les directions verticale et longitudinale de manière à répartir les efforts de maintien du panneau insonorisant 14 sur chaque languette et à maintenir le panneau parfaitement plaqué contre la structure 10. Ceci aura pour avantage d'assurer une meilleure étanchéité acoustique au niveau de chaque évidement 26 réalisé dans la structure permettant de faire passer des câblages ou des conduits du compartiment moteur à l'habitacle ou inversement. Un autre avantage est que l'opérateur trouvera plus rapidement les trous de fixation permettant de solidariser le panneau insonorisant 14 avec la structure 10. L'opération de montage de l'insonorisant sera donc beaucoup plus rapide et aisée. Enfin, les proximités avec l'environnement du panneau insonorisant 14 seront mieux gérées.

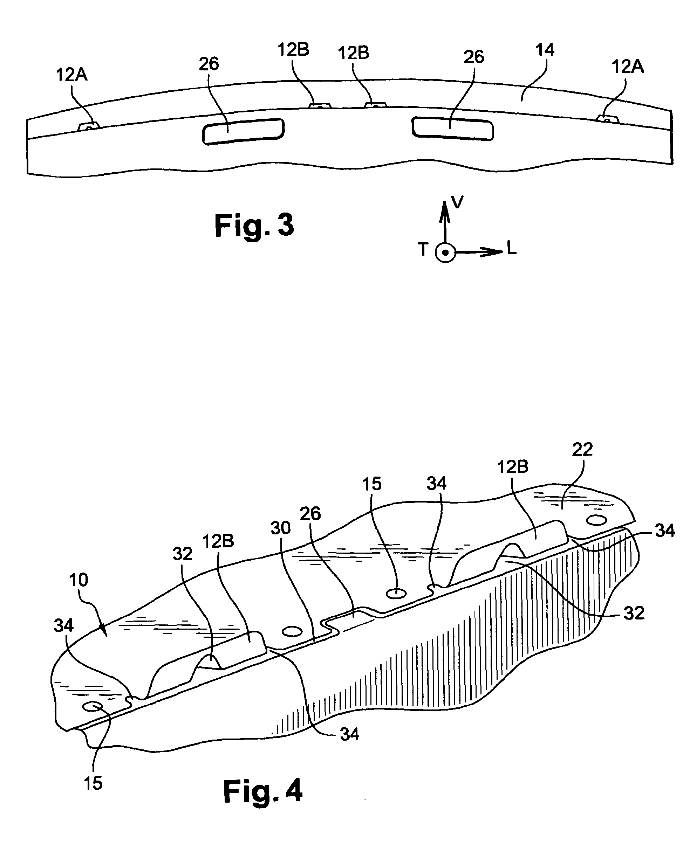

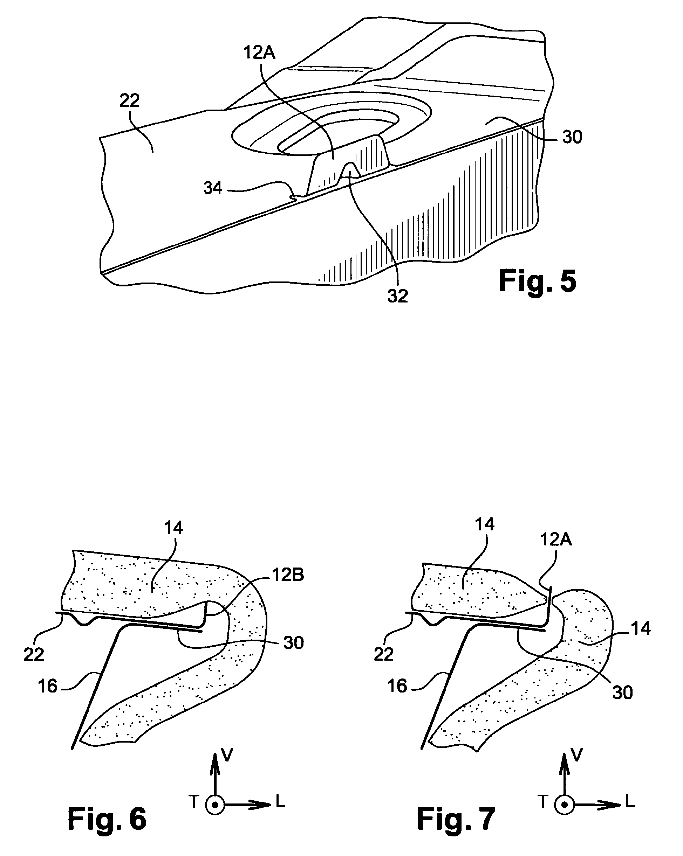

Selon le mode de réalisation de l'invention, la structure comporte quatre languettes telles qu'illustrées sur la figure 3, deux languettes 12A sont disposées latéralement sur la jonction 30 traverse/cloison de chauffage et deux languettes 12B sont centrales sur la jonction 30 (illustrée sur les figures 6 et 7). Les languettes centrales 12B se trouvent, plus précisément, à proximité d'une encoche 28 de mise en géométrie de la tôlerie nécessaire pour l'assemblage de la structure 10.

Selon l'invention, la longueur des languettes est la même pour les quatre et est définie par l'implantation de points de soudure 15. En effet, la distance entre les points de soudure étant déjà définie, les languettes ne peuvent être implantées qu'entre deux points de soudure et aucun point ne peut être supprimé ni même déplacé. Selon notre invention, la hauteur des languettes latérales 12A est supérieure à la hauteur des languettes centrales 12B. En effet, la hauteur des languettes latérales 12A est, de préférence, de 15mm. Cette hauteur est limitée par la mise en bande de la traverse 22. Par mise en bande, il faut entendre la détermination de la largeur et de la longueur de la plaque métallique sur laquelle on vient découper le profil de la pièce à fabriquer avant toute opération d'usinage tel que l'emboutissage et le pliage. La hauteur des languettes centrales 12B est, de préférence, de 10mm. Il s'agit d'une hauteur choisie pour éviter les proximités avec les pièces environnantes, mais toute autre longueur pourrait être choisie de manière à satisfaire à ce critère de proximité environnemental.

II convient de noter que, de préférence et tel que représenté sur la figure 7, la languette 12A possède une hauteur adéquate pour qu'elle soit apparente une fois le panneau insonorisant 14 monté sur la structure de caisse 10 de manière à ce que l'opérateur s'assure qu'il a bien mis en position le panneau avant sa fixation définitive avec la structure. Cependant, selon le mode de réalisation de l'invention et tel que représenté sur la figure 6, la languette 12B n'est pas apparente une fois le panneau insonorisant 14 monté sur la structure de caisse 10. Celle-ci possède une hauteur telle qu'elle que la languette se termine dans la mousse du panneau insonorisant pour satisfaire les contraintes environnementales.

Afin de renforcer leur structure, chaque languette 12A et 12B présente en son centre un embouti 32 formant un bossage orienté vers une direction opposée à la résultante des forces générées par le panneau lorsque celui-ci est monté sur la structure rigide. Ainsi, elles sont plus résistantes au poids du panneau 14 et assure un bon maintien de ce dernier sans risque qu'elles ne se déforment.

Enfin, des encoches 34 sont prévues de part et d'autre des languettes 12A et 12B de manière à faciliter l'opération de pliage des extensions 12, afin d'aboutir aux languettes 12A et 12B selon l'invention. Notamment, elles permettent d'absorber le rayon de pliage.

Afin de pouvoir positionner le panneau 14 sur la structure, il convient de remarquer que ce dernier comporte des découpes (non représentées) sous forme de fentes aptes à accueillir les languettes. Ces fentes sont réalisées sur le panneau insonorisant 14 de manière à ce qu'elles correspondent sensiblement aux dimensions des languettes, notamment à leur épaisseur et à leur largeur de manière à ce qu'il n'y ait pas de jeu lorsqu'il est monté sur la structure. D'autre part, elles sont disposées de manière adéquate à ce que le panneau soit parfaitement plaqué contre la structure 10 pour assurer tous les avantages précités.

Ainsi, une fois les extensions pliées au niveau de la jonction 30 pour former les languettes, un opérateur souhaitant mettre en position le panneau insonorisant 14 sur la structure 10 devra tout d'abord soulever le panneau et emmancher chaque languette dans chaque fente correspondante du panneau 14. Le panneau sera ainsi maintenu en position pour la fixation définitive par des agrafes.

Il convient de noter que selon l'invention, le nombre de languettes n'est pas limitatif et on pourrait très bien avoir une structure rigide comportant un nombre supérieur ou inférieur de languettes par rapport à notre mode de réalisation. Par ailleurs, la hauteur et la longueur des languettes peuvent varier en fonction de l'environnement des pièces de proximité et le type d'assemblage de la structure.

Ainsi, l'invention présente une nouvelle structure rigide de véhicule automobile, comportant des moyens de mise en position d'un panneau insonorisant, par rapport à l'art antérieur.

## Revendications

1. Structure rigide (10) apte à séparer le compartiment moteur (18) de l'habitacle (20) d'un véhicule automobile comprenant, dans sa partie supérieure, une traverse (22) au dessous de laquelle s'étend une cloison (16) sensiblement verticale, une zone de jonction (30) étant présente entre ces deux éléments (22) et (16), **caractérisée en ce que** la traverse comporte des extensions (12) de matière réalisées d'une seule pièce avec ladite traverse de manière à ce que, après pliage, ces extensions constituent des languettes (12A, 12B) de mise en position pour un panneau insonorisant (14).

2. Structure rigide selon la revendication 1, **caractérisée en ce que** les languettes (12A, 12B), après pliage, sont agencées au niveau de la jonction (30) entre la traverse (22) et la cloison (16) lorsque ces deux pièces sont assemblées.

3. Structure rigide selon l'une des revendications 1 ou 2, **caractérisée en ce que** une fois pliées, les languettes (12A, 12B) se trouvent dans un plan sensiblement vertical de manière à maintenir de manière adéquate le panneau insonorisant (14).

4. Structure rigide selon l'une des revendications précédentes, **caractérisée en ce que** les languettes (12A, 12B) sont réparties de manière symétrique par rapport à un plan (24) défini par une direction sensiblement verticale et sensiblement longitudinale de manière à assurer un bon maintien du panneau (14) sur la structure rigide (10).

5. Structure rigide selon l'une des revendications précédentes, **caractérisée en ce qu'**une languette latérale (12A) est disposée sensiblement au niveau de chaque extrémité latérale de la jonction (30) de la traverse (22) avec la cloison (16) et deux languettes centrales (12B) sont disposées de part et d'autre à proximité du plan de symétrie (24).

6. Structure rigide selon l'une des revendications précédentes, **caractérisée en ce que** les languettes (12A, 12B) ont une longueur adaptée à ce qu'elles soient apparentes une fois le panneau insonorisant monté sur la structure rigide.

7. Structure rigide selon l'une des revendications précédentes, **caractérisée en ce que** la hauteur des languettes latérales (12A) est supérieure à la hauteur des languettes centrales (12B).

8. Structure rigide selon l'une des revendications précédentes, **caractérisée en ce que** les languettes (12A, 12B) sont renforcées en leur centre par un embouti (32) formant un bossage orienté vers une direction opposée à la résultante des forces générées par le panneau (14) lorsque celui-ci est monté sur la structure rigide (10).

9. Structure rigide selon l'une des revendications précédentes, **caractérisée en ce que** des encoches (34) sont disposées de part et d'autre de chaque languette (12A, 12B) pour faciliter l'opération de pliage.

10. Panneau insonorisant apte à être monté sur la structure rigide selon l'une des revendications 1 à 9, **caractérisé en ce qu'**il comprend dans sa partie supérieure des découpes de réception des languettes (12A, 12B) de manière à ce que ledit panneau (14) soit disposé de manière adéquate pour assurer une bonne étanchéité acoustique une fois celui-ci monté sur ladite structure rigide.

## Claims

1. Rigid structure (10) designed to separate the engine compartment (18) from the passenger compartment (20) of a motor vehicle, said structure comprising, in its upper portion, a crossmember (22) below which an approximately vertical partition (16) extends, a junction region (30) being present between these two elements (22) and (16), **characterized in that** the crossmember includes extensions (12) produced as one piece with said crossmember so that, after being folded, these extensions constitute positioning tabs (12A, 12B) for a soundproofing panel (14).

2. Rigid structure according to Claim 1, **characterized in that** the tabs (12A, 12B), after being folded, are placed at the junction (30) between the crossmember (22) and the partition (16) when these two parts are assembled.

3. Rigid structure according to either of Claims 1 and 2, **characterized in that**, once they have been folded, the tabs (12A, 12B) lie in an approximately vertical plane so that the soundproofing panel (14) is suitably held in position.

4. Rigid structure according to one of the preceding claims, **characterized in that** the tabs (12A, 12B) are distributed symmetrically with respect to a plane (24) defined by an approximately vertical and substantially longitudinal direction so as to ensure that the panel (14) is properly held in position on the rigid structure (10).

5. Rigid structure according to one of the preceding claims, **characterized in that** a lateral tab (12A) is placed close to each lateral end of the junction (30) between the crossmember (22) and the partition (16) and two central tabs (12B) are placed on either side of and in proximity to the plane of symmetry (24).

6. Rigid structure according to one of the preceding claims, **characterized in that** the tabs (12A, 12B) have a suitable length so that they are visible once the soundproofing panel has been mounted on the rigid structure.

7. Rigid structure according to one of the preceding claims, **characterized in that** the height of the lateral tabs (12A) is greater than the height of the central tabs (12B) .

8. Rigid structure according to one of the preceding claims, **characterized in that** the tabs (12A, 12B) are reinforced at their center by a stamped feature (32) forming a protrusion oriented in an opposite direction to the resultant of the forces generated by the panel (14) when the latter is mounted on the rigid structure (10) .

9. Rigid structure according to one of the preceding claims, **characterized in that** notches (34) are placed on either side of each tab (12A, 12B) in order to facilitate the folding operation.

10. Soundproofing panel designed to be mounted on the rigid structure according to one of Claims 1 to 9, **characterized in that** it includes, in its upper portion, cutouts for receiving the tabs (12A, 12B) so that said panel (14) is suitably positioned for ensuring good acoustic sealing once it has been mounted on said rigid structure.

## Patentansprüche

1. Starre Struktur (10) zum Trennen des Motorraums (18) von dem Innenraum (20) eines Kraftfahrzeugs, die in ihrem oberen Teil einen Querträger (22), unter dem sich eine im Wesentlichen vertikale Trennwand (16) erstreckt, und einen Verbindungsbereich (30), der zwischen diesen beiden Elementen (22) und (16) vorgesehen ist, umfasst, **dadurch gekennzeichnet, dass** der Querträger Materialverlängerungen (12) aufweist, die einstückig mit dem Querträger ausgebildet sind, so dass diese Verlängerungen nach dem Biegen Positionierlaschen (12A, 12B) für eine schalldämmende Platte (14) bilden.

2. Starre Struktur nach Anspruch 1, **dadurch gekennzeichnet, dass** die Laschen (12A, 12B) nach dem Biegen an der Verbindungsstelle (30) zwischen dem Querträger (22) und der Trennwand (16) angeordnet sind, wenn die beiden Teile zusammengefügt sind.

3. Starre Struktur nach Anspruch 1 oder 2, **dadurch gekennzeichnet, dass** sich die Laschen (12A, 12B) nach dem Biegen in einer im Wesentlichen vertikalen Ebene befinden, um die schalldämmende Platte (14) angemessen zu halten.

4. Starre Struktur nach einem der vorhergehenden Ansprüche, **dadurch gekennzeichnet, dass** die Laschen (12A, 12B) bezüglich einer durch eine im Wesentlichen vertikale und im Wesentlichen longitudinale Richtung definierten Ebene (24) symmetrisch verteilt sind, um ein gutes Halten der Platte (14) an der starren Struktur (10) zu gewährleisten.

5. Starre Struktur nach einem der vorhergehenden Ansprüche, **dadurch gekennzeichnet, dass** eine laterale Lasche (12A) im Wesentlichen an jedem lateralen Ende der Verbindungsstelle (30) des Querträgers (22) mit der Trennwand (16) angeordnet ist und zwei mittlere Laschen (12B) auf beiden Seiten nahe der Symmetrieebene (24) angeordnet sind.

6. Starre Struktur nach einem der vorhergehenden Ansprüche, **dadurch gekennzeichnet, dass** die Laschen (12A, 12B) eine solche Länge aufweisen, dass sie nach dem Montieren der schalldämmenden Platte an der starren Struktur sichtbar sind.

7. Starre Struktur nach einem der vorhergehenden Ansprüche, **dadurch gekennzeichnet, dass** die Höhe der lateralen Laschen (12A) größer ist als die Höhe der mittleren Laschen (12B).

8. Starre Struktur nach einem der vorhergehenden Ansprüche, **dadurch gekennzeichnet, dass** die Laschen (12A, 12B) in ihrer Mitte durch ein Tiefziehteil (32) verstärkt sind, das einen Ansatz bildet, der in eine Richtung ausgerichtet ist, die der Resultierenden der durch die Platte (14), wenn sie an der starren Struktur (10) befestigt ist, erzeugten Kräfte entgegengesetzt ist.

9. Starre Struktur nach einem der vorhergehenden Ansprüche, **dadurch gekennzeichnet, dass** Kerben (34) auf beiden Seiten jeder Lasche (12A, 12B) angeordnet sind, um den Biegevorgang zu erleichtern.

10. Schalldämmende Platte zum Montieren an der starren Struktur nach einem der Ansprüche 1 bis 9, **dadurch gekennzeichnet, dass** sie in ihrem oberen Teil Ausschnitte zur Aufnahme der Laschen (12A, 12B) aufweist, so dass die Platte (14) angemessen angeordnet wird, um eine gute Akustikdichtung zu gewährleisten, nachdem sie an der starren Struktur montiert ist.
